# EUROPÄISCHE PATENTANMELDUNG

(11) **EP 1 031 460 A2**
(43) Veröffentlichungstag der Anmeldung: **30.08.2000**
(21) Anmeldenummer: 00100329.2
(22) Anmeldetag: 07.01.2000
(51) Int. Cl.: B60N 2/56

(54) **Verfahren und Vorrichtung zum Beheizen einer Sitzfläche durch elektrische Widerstandsbeheizung**

(30) Priorität: 24.02.1999 DE 19907968
(71) Anmelder: Bayerische Motoren Werke Aktiengesellschaft, 80809 München (DE)
(72) Erfinder: Schwarzkopf, Richard, 86577 Sielenbach (DE); Lüddeke, Uwe, 85579 Neubiberg (DE)

(57) **Zusammenfassung**

Bei einem Verfahren zum Beheizen eines Sitzes durch elektrische Widerstandsbeheizung wird zunächst ein begrenzter Teilbereich der Sitz- und/oder Lehnenfläche mit relativ hoher Heizleistung beheizt und erst nach Eintritt vorgegebener Bedingungen der verbleibende zur Beheizung vorgesehene Teil der Sitz- und/oder Lehnenfläche zusätzlich oder gesondert beheizt.

## Beschreibung

Sitze mit elektrischer Widerstandsbeheizung zur Schaffung eines angenehmen Behaglichkeitsgefühls werden in der Hauptsache in Fahrzeugen, wie Kraftfahrzeugen oder Flugzeugen eingesetzt. Die Beheizung erfolgt dann bei kaltem Wetter in der Regel unmittelbar nach dem Anwerfen des Motors, während sich der Motor noch im Leerlauf befindet. Der von der Lichtmaschine erzeugte elektrische Strom reicht dann noch nicht aus, um die Sitzfläche aufzuheizen, so daß zusätzlich Strom aus der noch kalten Batterie entnommen werden muß, was zu einer schnellen Erschöpfung der Batterie führen kann.

Der Erfindung liegt die Aufgabe zugrunde, eine elektrische Sitzheizung so zu gestalten, daß sich beim Benutzer schnell ein Behaglichkeitsgefühl einstellt, ohne daß dies mit einer übermäßigen Belastung des Bordnetzes verbunden ist.

Erfindungsgemäß wird dieses Ziel mit den Merkmalen des Patentanspruchs 1 erreicht.

Es wird zunächst nur ein begrenzter Teilbereich der Sitzfläche (i.f. Zentralbereich genannt) mit relativ hoher (spezifischer) Heizleistung beheizt, wodurch sich das Behaglichkeitsgefühl schnell einstellt. Erst danach wird zur Erreichung einer vollständigen Sitzbeheizung die gesamte, ein Teil oder aber die gesamte restliche Sitzfläche beheizt. Durch die Aufteilung der Sitzfläche in einen kleinen Zentralbereich, der zuerst und schnell geheizt wird, und mindestens einen zweiten Teilbereich, der zumindest einen Teil der verbleibenden Sitzfläche umfaßt und der erst danach beheizt wird, läßt sich die der Batterie entnommene maximale Heizleistung wesentlich vermindern.

Es ist besonders vorteilhaft, die Beheizung der verbleibenden Sitzfläche vorzunehmen, indem diese Fläche anstelle des Zentralbereichs beheizt wird. Die gesamte Heizteistung wird dabei verringert. Sie reicht aber in aller Regel aus, die gesamte Sitzfläche ausreichend zu beheizen.

Die Umschaltung von Zentralbereich auf die verbleibende Sitzfläche mit oder ohne Zentralbereich kann mittels einer selbsttätigen zeit- und/oder temperaturabhängigen Schaltung durchgeführt werden.

Die erfindungsgemäße Sitzheizung mit zwei voneinander unabhängigen elektrischen Widerstandsheizungen ist demgemäß so ausgestaltet, daß sich die erste Widerstandsheizung nur über einen Teil des Heizfeldes erstreckt, während die zweite Widerstandsheizung den verbleibenden Teil des Heizfeldes umfaßt. Dabei ist eine Schaltung zum Einschalten des ersten Teiles des Heizfeldes und zum zeitlich getakteten Hintereinanderschalten beider Teile des Heizfeldes vorgesehen.

Der ggf. vorgesehene zeit- und/oder temperaturabhängige Schalter zur Umschaltung von der Beheizung des ersten Teilbereichs des Heizfeldes auf die Beheizung des gesamten Heizfeldes kann als Bimetallschalter ausgeführt sein. Die Beheizung erfolgt vorzugsweise durch in einer Zwischenschicht der Sitzfläche angeordnete Widerstandsheizdrähte.

## Patentansprüche

1. Verfahren zum Beheizen eines Sitzes durch elektrische Widerstandsbeheizung, dadurch gekennzeichnet, daß zunächst ein begrenzter Teilbereich der Sitz- und/oder Lehnenfläche mit relativ hoher spezifischer Heizleistung beheizt wird und daß erst nach Eintritt vorgegebener Bedingungen der verbleibende zur Beheizung vorgesehene Teil der Sitz- und/oder Lehnenfläche zusätzlich oder gesondert beheizt wird.

2. Verfahren nach Anspruch 1, dadurch gekennzeichnet, daß der anschließend zur Beheizung vorgesehene Teil der Sitz- und/oder Lehnenfläche nach Erreichen einer bestimmten Temperatur der zuerst beheizten Teilfläche beheizt wird.

3. Verfahren nach Anspruch 1, dadurch gekennzeichnet, daß der anschließend zur Beheizung vorgesehene Teil der Sitz- und/oder Lehnenfläche nach Ablauf einer vorgegebenen Zeit beheizt wird.

4. Verfahren nach einem der Ansprüche 1 bis 3, dadurch gekennzeichnet, daß die anschließend zur Beheizung vorgesehene Teilfläche als Ganzes oder anteilig parallel zur ersten Teilfläche zugeschaltet wird.

5. Verfahren nach einem der Ansprüche 1 bis 4, dadurch gekennzeichnet, daß während der Aufheizphase für die Beheizung der zuerst beheizten Teilfläche und die Beheizung der nachfolgend beheizten Teilflächen stets die maximal zur Verfügung stehende Heizleistung abgerufen wird.

6. Vorrichtung zur Durchführung des Verfahrens nach einem der Patentansprüche 1 bis 5, dadurch gekennzeichnet, daß die Sitzheizung mindestens zwei voneinander unabhängige elektrische Widerstandsheizungen besitzt, wobei sich die erste Widerstandsheizung nur über einen Teil des Heizfeldes erstreckt, während die zweite Widerstandsheizung den verbleibenden Teil des Heizfeldes umfaßt und mittels einer Schaltung die Heizfelder unabhängig voneinander an die Bordnetzspannung anschaltbar sind..
